(19) Europäisches Patentamt
European Patent Office
Office européen des brevets

(11) EP 4 276 122 A1

(12) **EUROPEAN PATENT APPLICATION**
published in accordance with Art. 153(4) EPC

(43) Date of publication:
**15.11.2023 Bulletin 2023/46**

(21) Application number: **21917751.6**

(22) Date of filing: **27.12.2021**

(51) International Patent Classification (IPC):
***C08F 210/02*** *(2006.01)* ***C08F 214/26*** *(2006.01)*
***C08F 2/06*** *(2006.01)*

(52) Cooperative Patent Classification (CPC):
**C08F 2/06; C08F 210/02; C08F 214/26**

(86) International application number:
**PCT/JP2021/048650**

(87) International publication number:
**WO 2022/149531 (14.07.2022 Gazette 2022/28)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **08.01.2021 JP 2021002103**

(71) Applicant: **AGC INC.**
**Chiyoda-ku,**
**Tokyo 1008405 (JP)**

(72) Inventors:
- **ORITO, Yuki**
**Tokyo 100-8405 (JP)**
- **WATANUKI, Shun**
**Tokyo 100-8405 (JP)**

(74) Representative: **TBK**
**Bavariaring 4-6**
**80336 München (DE)**

(54) **FLUORINE-CONTAINING COPOLYMER PRODUCTION METHOD AND FLUORINE-CONTAINING COPOLYMER**

(57) Provided is a method of producing a fluorine-containing copolymer, the method including carrying out solution polymerization using monomers including ethylene and tetrafluoroethylene, in a polymerization medium containing at least one polymerization solvent A selected from the group consisting of compounds represented by Formula 1 to Formula 4. Also provided is a fluorine-containing copolymer. Descriptions for Formula 1 to Formula 4 are omitted.

EP 4 276 122 A1

**Description**

Technical Field

The present disclosure relates to a method of producing a fluorine-containing copolymer, and a fluorine-containing copolymer.

Background Art

Fluorine-containing polymers are polymer materials excellent in heat resistance, solvent resistance, chemical resistance, and the like. Because of such advantageous characteristics, fluorine-containing polymers have been utilized in a variety of uses in recent years.

As production methods for fluorine-containing polymers, polymerization methods such as solution polymerization, suspension polymerization, and emulsion polymerization are known.

For example, Chinese Patent Application Laid-Open (CN-A) No. 110467695 describes a method in which polymerization reaction is carried out by emulsion polymerization using ethylene and tetrafluoroethylene as raw materials, in a mixed liquid of water and an organic solvent. Japanese Patent Application Laid-Open (JP-A) No. H8-59717 describes a production method for a hydrogen-containing fluoropolymer, the method including carrying out (co)polymerization in an organic suspension medium in the presence of a radical photoinitiator and an ultraviolet-visible ray at a temperature of from -60°C to 30°C.

SUMMARY OF INVENTION

Technical Problem

However, since the production methods described in CN-ANo. 110467695 and JP-A No. H8-59717 show slow polymerization rates, a method for more efficiently obtaining a fluorine-containing copolymer has been demanded.

According to embodiments of the present invention, a method of producing a fluorine-containing copolymer at a higher polymerization rate than before, and a fluorine-containing copolymer obtained by the production method, are provided.

Solution to Problem

The disclosure includes the following modes.

<1> A method of producing a fluorine-containing copolymer, the method including carrying out solution polymerization using monomers including ethylene and tetrafluoroethylene, in a polymerization medium containing at least one polymerization solvent A selected from the group consisting of compounds represented by the following Formula 1 to Formula 4:

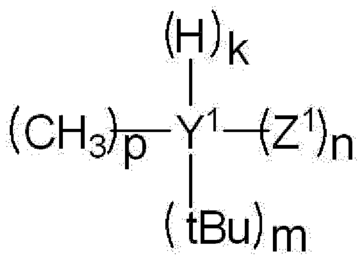

(1)

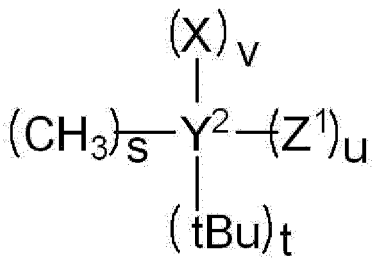

(2)

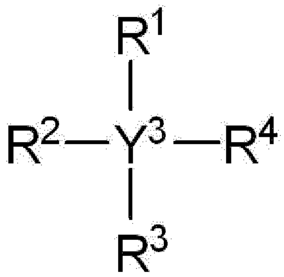

(3)

$$CH_3—Z^2 \qquad (4)$$

wherein, in Formula 1,

$Y^1$ represents a nitrogen atom or an oxygen atom;
when $Y^1$ is a nitrogen atom, p, m, n, and k are each independently an integer satisfying $p + m > 1$ and $p + m + n + k = 3$;
when $Y^1$ is an oxygen atom, p, m, n, and k are each independently an integer satisfying $p + m > 1$ and $p + m + n + k = 2$; and
when p is not less than 1, n is not less than 1;

wherein, in Formula 2,

$Y^2$ represents a carbon atom, a silicon atom, a phosphorus atom, or a sulfur atom;
when $Y^2$ is a carbon atom or a silicon atom, s, t, u, and v are each independently an integer satisfying $s + t > 1$ and $s + t + u + v = 4$;
when $Y^2$ is a phosphorus atom, s, t, u, and v are each independently an integer satisfying $s + t > 1$ and $s + t + u + v = 3$;
when $Y^2$ is a sulfur atom, s, t, u, and v are each independently an integer satisfying $s + t > 1$ and $s + t + u + v = 2$;
when s is not less than 1, u is not less than 1; and
each X independently represents a chlorine atom or a bromine atom; wherein, in Formula 1 and Formula 2, each $Z^1$ is independently a group represented by any one of the following Formulae T1 to T14;

wherein, in Formula 3,

$Y^3$ represents a carbon atom or a silicon atom; and
$R^1$ to $R^4$ each independently represent a methyl group, a tert-butyl group, or a *tert*-butoxy group; and

wherein, in Formula 4,

$Z^2$ is a group represented by the following Formula T14;

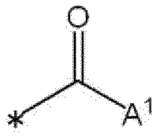
(T1)

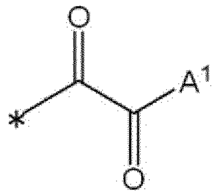
(T2)

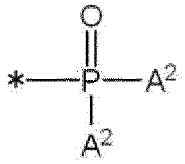
(T3)

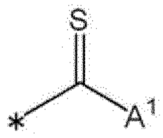
(T4)

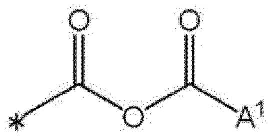
(T5)

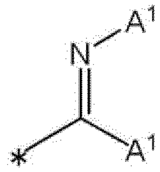
(T6)

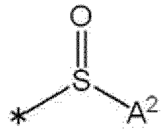
(T7)

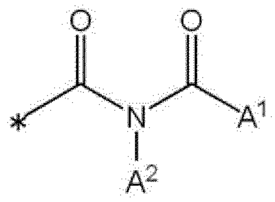
(T8)

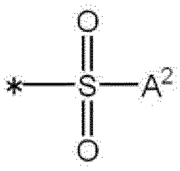
(T9)

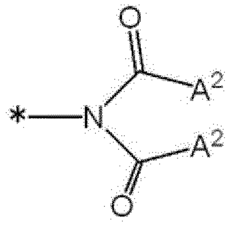
(T10)

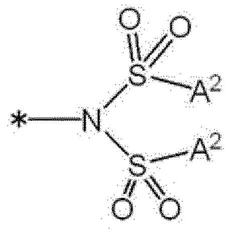
(T11)

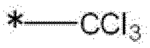
(T12)

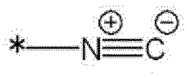
(T13)

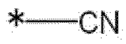
(T14)

wherein, in Formulae T1 to T14, each $A^1$ independently represents a hydrogen atom, a chlorine atom, a methyl group, a tert-butyl group, -OR, $-NR_2$, or -SR; each $A^2$ independently represents a chlorine atom, a methyl group, a *tert*-butyl group, -OR, $-NR_2$, or -SR; each R independently represents a methyl group or *tert*-butyl group; and * represents a bonding site.

<2> The method of producing a fluorine-containing copolymer according to <1>, wherein in Formula 2, $Y^2$ represents a carbon atom, a silicon atom, or a sulfur atom.
<3> The method of producing a fluorine-containing copolymer according to <1>, wherein in Formula 2, $Y^2$ represents a carbon atom or a silicon atom.
<4> The method of producing a fluorine-containing copolymer according to any one of <1> to <3>, wherein in Formula 2, X represents a chlorine atom.
<5> The method of producing a fluorine-containing copolymer according to any one of <1> to <4>, wherein, in Formulae T1 to T14, each $A^1$ independently represents a methyl group, a *tert*-butyl group, -OR, or $-NR_2$; each $A^2$ independently represents a methyl group, a *tert*-butyl group, -OR, or $-NR_2$; and each R independently represents a methyl group or a *tert*-butyl group.
<6> The method of producing a fluorine-containing copolymer according to any one of <1> to <5>, wherein, in Formula 1 and Formula 2, each $Z^1$ is independently a group represented by any one of Formulae T1 to T7.
<7> The method of producing a fluorine-containing copolymer according to any one of <1> to <6>, wherein, in Formula 1 and Formula 2, each $Z^1$ is independently a group represented by any one of Formulae T1 to T3.
<8> The method of producing a fluorine-containing copolymer according to any one of <1> to <7>, wherein, in Formula 3, $Y^3$ represents a carbon atom.
<9> The method of producing a fluorine-containing copolymer according to any one of <1> to <8>, wherein, in a

stage during the polymerization, the following inequation is satisfied:

$$0.5 < M_{sol} \times S/M_{mon} < 1.0$$

wherein $M_{sol}$ is an amount of substance (mol) of the polymerization solvent A; S is a total solubility (mol/mol) of the ethylene and the tetrafluoroethylene in the polymerization solvent A; and $M_{mon}$ is a total amount of substance (mol) of the ethylene and the tetrafluoroethylene dissolved in the polymerization medium.

<10> A fluorine-containing copolymer including structural units derived from ethylene and tetrafluoroethylene, wherein an amount of substance of end groups derived from at least one polymerization solvent A selected from the group consisting of compounds represented by the following Formula 1 to Formula 4 is from 0.1 μmol/g to 100 μmol/g with respect to a total mass of the fluorine-containing copolymer:

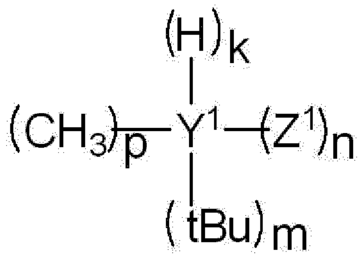

(1)

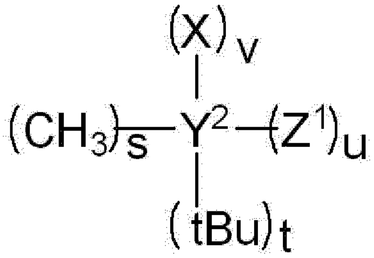

(2)

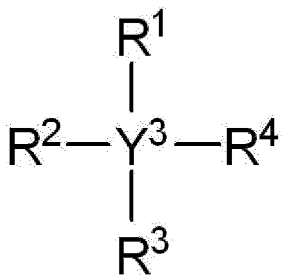

(3)

$CH_3$-$Z^2$ (4)

wherein, in Formula 1,

$Y^1$ represents a nitrogen atom or an oxygen atom;
when $Y^1$ is a nitrogen atom, p, m, n, and k are each independently an integer satisfying p + m > 1 and p + m + n + k = 3;
when $Y^1$ is an oxygen atom, p, m, n, and k are each independently an integer satisfying p + m > 1 and p + m + n + k = 2; and
when p is not less than 1, n is not less than 1;

wherein, in Formula 2,

$Y^2$ represents a carbon atom, a silicon atom, a phosphorus atom, or a sulfur atom;

when $Y^2$ is a carbon atom or a silicon atom, s, t, u, and v are each independently an integer satisfying s + t > 1 and s + t + u + v = 4;
when $Y^2$ is a phosphorus atom, s, t, u, and v are each independently an integer satisfying s + t > 1 and s + t + u + v = 3;
when $Y^2$ is a sulfur atom, s, t, u, and v are each independently an integer satisfying s + t > 1 and s + t + u + v = 2;
when s is not less than 1, u is not less than 1; and
each X independently represents a chlorine atom or a bromine atom;

wherein, in Formula 1 and Formula 2,
each $Z^1$ is independently a group represented by any one of the following Formulae T1 to T14;
wherein, in Formula 3,

$Y^3$ represents a carbon atom or a silicon atom; and
$R^1$ to $R^4$ each independently represent a methyl group, a *tert*-butyl group, or a *tert*-butoxy group; and

wherein, in Formula 4,

$Z^2$ is a group represented by the following Formula T14;

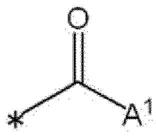
(T1)

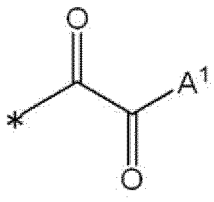
(T2)

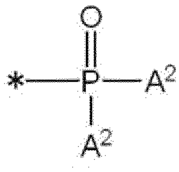
(T3)

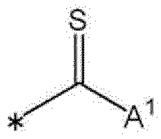
(T4)

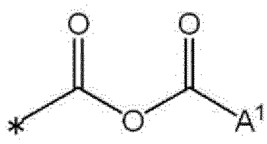
(T5)

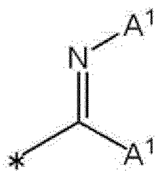
(T6)

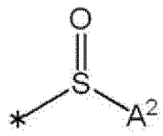
(T7)

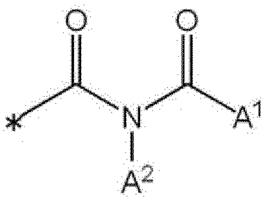
(T8)

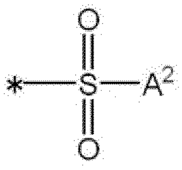
(T9)

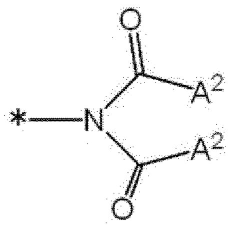
(T10)

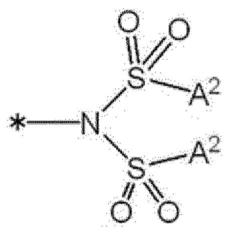
(T11)

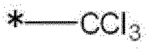
(T12)

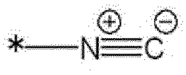
(T13)

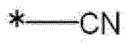
(T14)

wherein in Formulae T1 to T14, each $A^1$ independently represents a hydrogen atom, a chlorine atom, a methyl group, a *tert*-butyl group, -OR, $-NR_2$, or -SR; each $A^2$ independently represents a chlorine atom, a methyl group, a *tert*-butyl group, -OR, $-NR_2$, or -SR; each R independently represents a methyl group or a

*tert*-butyl group; and * represents a bonding site. Advantageous Effects of Invention

According to the disclosure, a method of producing a fluorine-containing copolymer at a higher polymerization rate than before, and a fluorine-containing copolymer obtained by the production method, are provided.

DESCRIPTION OF EMBODIMENTS

In the disclosure, each numerical range expressed using "from ... to ..." means the range including the values described before and after "to" as the minimum value and the maximum value, respectively.

Regarding the numerical ranges described in a stepwise manner in the disclosure, the upper limit value or lower limit value described for a certain numerical range may be replaced by the upper limit value or lower limit value of another numerical range in the stepwise description. Regarding the numerical ranges described in the disclosure, the upper limit value or lower limit value described in a certain numerical range may be replaced by a value described in Examples.

In the disclosure, a combination of two or more preferred modes is a more preferred mode.

In the disclosure, when a plurality of kinds of substances corresponding to a certain component are present, the amount of the component means the total amount of the plurality of kinds of substances, unless otherwise specified.

[Method of Producing Fluorine-Containing Copolymer]

The method of producing a fluorine-containing copolymer of the disclosure is a method including carrying out solution polymerization using monomers including ethylene and tetrafluoroethylene, in a polymerization medium containing at least one polymerization solvent A selected from the group consisting of compounds represented by the following Formula 1 to Formula 4:

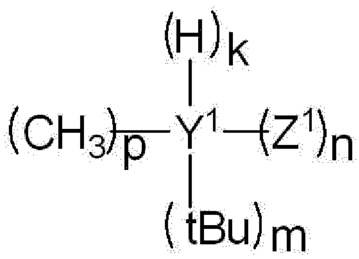
(1)

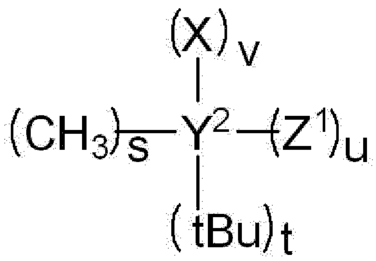
(2)

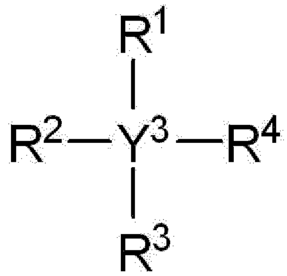
(3)

$$CH_3—Z^2 \qquad (4)$$

wherein in Formula 1,

$Y^1$ represents a nitrogen atom or an oxygen atom;
when $Y^1$ is a nitrogen atom, p, m, n, and k are each independently an integer satisfying $p + m > 1$ and $p + m + n + k = 3$;
when $Y^1$ is an oxygen atom, p, m, n, and k are each independently an integer satisfying $p + m > 1$ and $p + m + n + k = 2$; and
when p is not less than 1, n is not less than 1;

wherein in Formula 2,

$Y^2$ represents a carbon atom, a silicon atom, a phosphorus atom, or a sulfur atom;
when $Y^2$ is a carbon atom or a silicon atom, s, t, u, and v are each independently an integer satisfying $s + t > 1$ and $s + t + u + v = 4$;
when $Y^2$ is a phosphorus atom, s, t, u, and v are each independently an integer satisfying $s + t > 1$ and $s + t + u + v = 3$;
when $Y^2$ is a sulfur atom, s, t, u, and v are each independently an integer satisfying $s + t > 1$ and $s + t + u + v = 2$;
when s is not less than 1, u is not less than 1; and
each X independently represents a chlorine atom or a bromine atom;

wherein in Formula 1 and Formula 2,
each $Z^1$ is independently a group represented by any one of the following Formulae T1 to T14;
wherein in Formula 3,

$Y^3$ represents a carbon atom or a silicon atom; and
$R^1$ to $R^4$ each independently represent a methyl group, a tert-butyl group, or a *tert*-butoxy group; and

wherein in Formula 4,
$Z^2$ is a group represented by the following Formula T14;

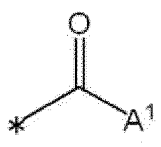
(T1)

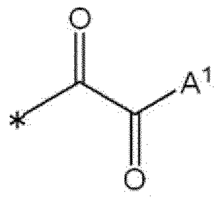
(T2)

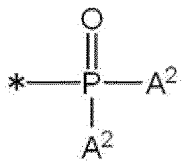
(T3)

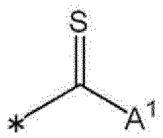
(T4)

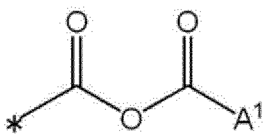
(T5)

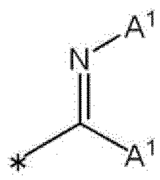
(T6)

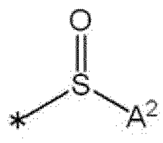
(T7)

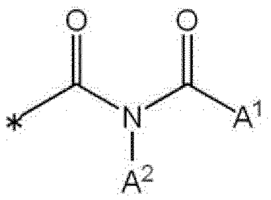

(T8)

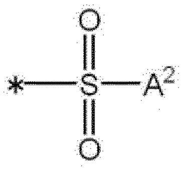

(T9)

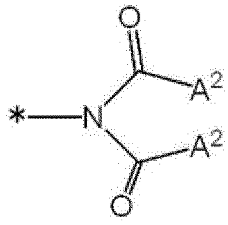

(T10)

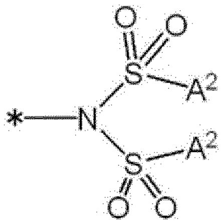

(T11)

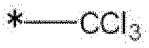

(T12)

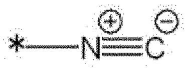

(T13)

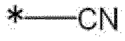

(T14)

wherein in Formulae T1 to T14, each $A^1$ independently represents a hydrogen atom, a chlorine atom, a methyl group, a *tert*-butyl group, -OR, $-NR_2$, or -SR; each $A^2$ independently represents a chlorine atom, a methyl group, a *tert*-butyl group, -OR, $-NR_2$, or -SR; each R independently represents a methyl group or *tert*-butyl group; and * represents a bonding site.

By the use of the method of producing a fluorine-containing copolymer of the disclosure, polymerization can be allowed to proceed at a higher polymerization rate than before, to obtain a fluorine-containing copolymer. The present inventors infer that the reason why such an effect can be produced may be as follows.

In the method of producing a fluorine-containing copolymer of the disclosure, polymerization is carried out in a polymerization medium containing at least one polymerization solvent A selected from the group consisting of compounds represented by Formula 1 to Formula 4. All polymerization solvents A have low chain transfer activities. It is therefore assumed that the polymerization of the monomers including ethylene and tetrafluoroethylene can smoothly proceed.

The method of producing a fluorine-containing copolymer, and the fluorine-containing copolymer, of the disclosure are described below in detail.

(Polymerization Medium)

The polymerization medium contains at least one polymerization solvent A selected from the group consisting of compounds represented by Formula 1 to Formula 4.

<Compound Represented by Formula 1>

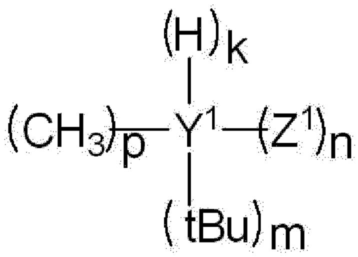

(1)

In Formula 1, $Y^1$ represents a nitrogen atom or an oxygen atom.

When $Y^1$ is a nitrogen atom, p, m, n, and k are each independently an integer satisfying $p + m > 1$ and $p + m + n + k = 3$.

When $Y^1$ is an oxygen atom, p, m, n, and k are each independently an integer satisfying $p + m > 1$ and $p + m + n + k = 2$.

When p is not less than 1, n is not less than 1;

Each $Z^1$ is independently a group represented by any one of Formulae T1 to T14;

In Formulae T1 to T14, each $A^1$ independently represents a hydrogen atom, a chlorine atom, a methyl group, a *tert*-butyl group, -OR, $-NR_2$, or -SR; each $A^2$ independently represents a chlorine atom, a methyl group, a *tert*-butyl group, -OR, $-NR_2$, or -SR; each R independently represents a methyl group or *tert*-butyl group; and * represents a bonding site.

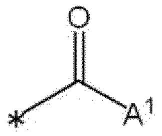

(T1)

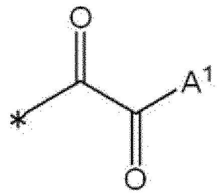

(T2)

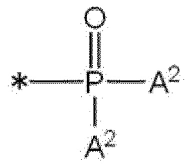

(T3)

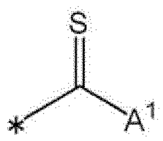

(T4)

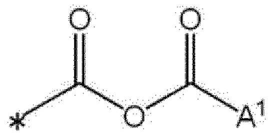

(T5)

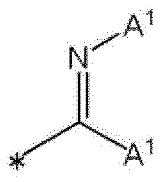

(T6)

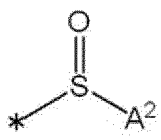

(T7)

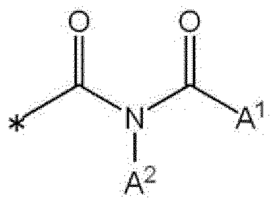

(T8)

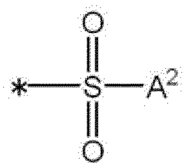

(T9)

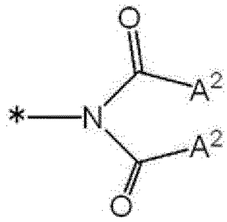

(T10)

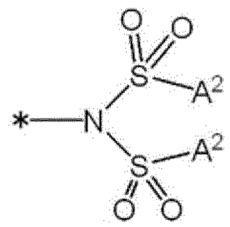

(T11)

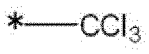

(T12)

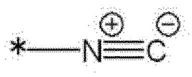

(T13)

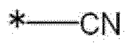

(T14)

In Formula 1, examples of the combination of p, m, n, and k include the following modes.

When $Y^1$ is a nitrogen atom,

(p, m, n, k) = (0, 1, 0, 2), (0, 1, 1, 1), (0, 1, 2, 0), (1, 0, 1, 1), (1, 0, 2, 0), (0, 2, 0, 1), (0, 2, 1, 0), (1, 1, 1, 0), (2, 0, 1, 0), or (0, 3, 0, 0).

When $Y^1$ is an oxygen atom,

(p, m, n, k) = (0, 1, 0, 1), (0, 1, 1, 0), (1, 0, 1, 0), or (0, 2, 0, 0).

From the viewpoint of increasing the polymerization rate and the molecular weight, $Y^1$ in Formula 1 is preferably an oxygen atom. In particular, the combination of p, m, n, and k is preferably as follows: (p, m, n, k) = (0, 1, 0, 1), (0, 1, 1, 0), or (1, 0, 1, 0).

When n is not less than 1, from the viewpoint of increasing the polymerization rate, each $Z^1$ is independently a group represented by any one of Formulae T1 to T14, preferably a group represented by any one of Formulae T1 to T7, more preferably a group represented by any one of Formulae T1 to T3.

In Formulae T1 to T14, each $A^1$ independently represents a hydrogen atom, a chlorine atom, a methyl group, a *tert*-butyl group, -OR, $-NR_2$, or -SR; each $A^2$ independently represents a chlorine atom, a methyl group, a *tert*-butyl group, -OR, $-NR_2$, or -SR; and each R independently represents a methyl group or a *tert*-butyl group. In particular, each $A^1$ preferably independently represents a methyl group, a *tert*-butyl group, -OR, or $-NR_2$; each $A^2$ preferably independently represents a methyl group, a *tert*-butyl group, -OR, or $-NR_2$; and each R preferably independently represents a methyl

group or a *tert*-butyl group.

In the compound represented by Formula 1, examples of $Z^1$ include the following compounds.

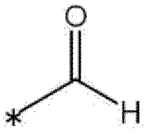
(T1-1)

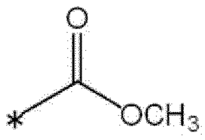
(T1-2)

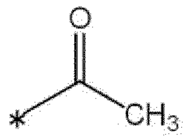
(T1-3)

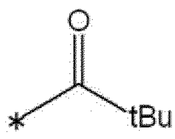
(T1-4)

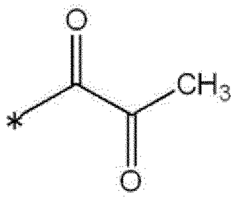
(T2-1)

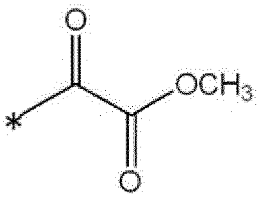
(T2-2)

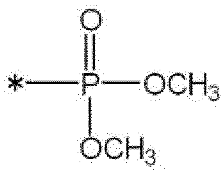
(T3-1)

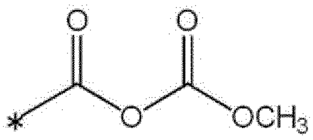
(T5-1)

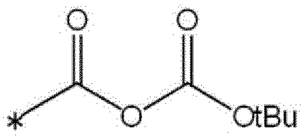
(T5-2)

Specific examples of the compound represented by Formula 1 are described below, but the compound represented by Formula 1 is not limited to these.

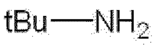
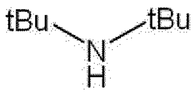
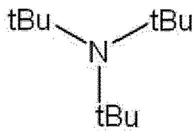

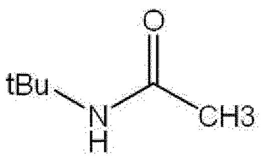
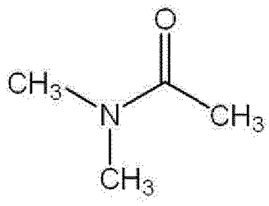
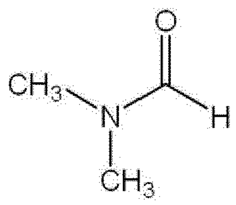

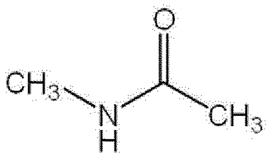
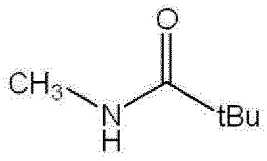
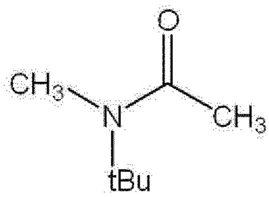

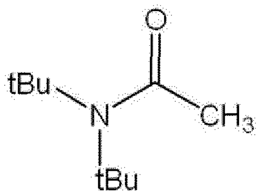

tBu-O-tBu tBuOH

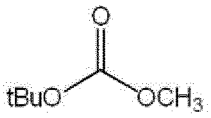
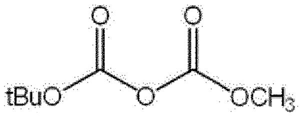
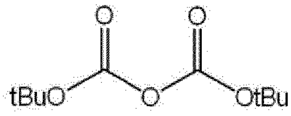

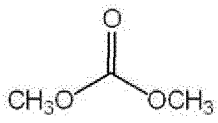
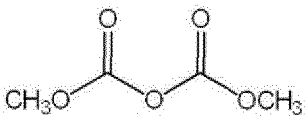
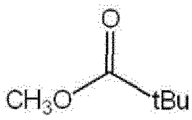

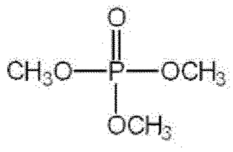
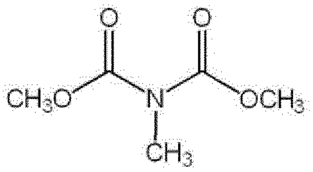

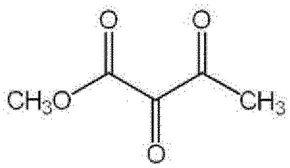
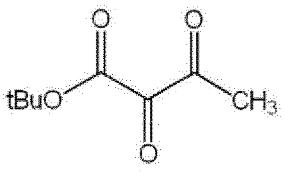

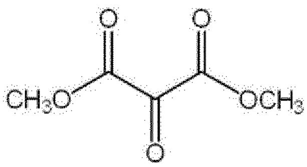

<Compound Represented by Formula 2>

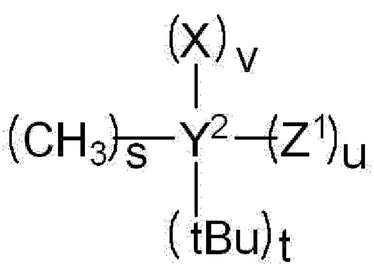
(2)

In Formula 2, $Y^2$ represents a carbon atom, a silicon atom, a phosphorus atom, or a sulfur atom.

When $Y^2$ is a carbon atom or a silicon atom, s, t, u, and v are each independently an integer satisfying s + t > 1 and s + t + u + v = 4.

When $Y^2$ is a phosphorus atom, s, t, u, and v are each independently an integer satisfying $s + t > 1$ and $s + t + u + v = 3$.

When $Y^2$ is a sulfur atom, s, t, u, and v are each independently an integer satisfying $s + t > 1$ and $s + t + u + v = 2$.

When s is not less than 1, u is not less than 1.

Each X independently represents a chlorine atom or a bromine atom.

Each $Z^1$ is independently a group represented by any one of Formulae T1 to T14.

In Formula 2, examples of the combination of s, t, u, and v include the following modes.

When $Y^2$ is a carbon atom or a silicon atom,

(s, t, u, v) = (0, 1, 0, 3), (0, 1, 1, 2), (0, 1, 2, 1), (0, 1, 3, 0), (1, 0, 1, 2), (1, 0, 2, 1), (1, 0, 3, 0), (0, 2, 0, 2), (0, 2, 1, 1), (0, 2, 2, 0), (1, 1, 1, 1), (1, 1, 2, 0), (2, 0, 1, 1), (2, 0, 2, 0), (0, 3, 0, 1), (0, 3, 1, 0), (1, 2, 1, 0), (2, 1, 1, 0), or (3, 0, 1, 0).

When $Y^2$ is a phosphorus atom,

(s, t, u, v) = (0, 1, 0, 2), (0, 1, 1, 1), (0, 1, 2, 0), (1, 0, 1, 1), (1, 0, 2, 0), (0, 2, 0, 1), (0, 2, 1, 0), (1, 1, 1, 0), (2, 0, 1, 0), or (0, 3, 0, 0).

When $Y^2$ is a sulfur atom,

(s, t, u, v) = (0, 1, 0, 1), (0, 1, 1, 0), (1, 0, 1, 0), or (0, 2, 0, 0).

In particular, when $Y^2$ is a carbon atom, the combination of s, t, u, and v is preferably as follows: (s, t, u, v) = (3, 0, 1, 0). When $Y^2$ is a phosphorus atom, the combination of s, t, u, and v is preferably as follows: (s, t, u, v) = (0, 3, 0, 0).

From the viewpoint of increasing the polymerization rate and the molecular weight, $Y^2$ in Formula 2 is preferably a carbon atom, a silicon atom, or a sulfur atom, more preferably a carbon atom or a silicon atom, still more preferably a carbon atom.

From the viewpoint of increasing the polymerization rate, X in Formula 2 is preferably a chlorine atom.

When u is not less than 1, from the viewpoint of increasing the polymerization rate, each $Z^1$ is independently a group represented by any one of Formulae T1 to T14, preferably a group represented by any one of Formulae T1 to T7, more preferably a group represented by any one of Formulae T1 to T3.

In Formulae T1 to T14, each $A^1$ independently represents a hydrogen atom, a chlorine atom, a methyl group, a tert-butyl group, -OR, $-NR_2$, or -SR; each $A^2$ independently represents a chlorine atom, a methyl group, a *tert*-butyl group, -OR, $-NR_2$, or -SR; and each R independently represents a methyl group or *tert*-butyl group. In particular, each $A^1$ preferably independently represents a methyl group, a *tert*-butyl group, -OR, or $-NR_2$; each $A^2$ preferably independently represents a methyl group, a *tert*-butyl group, -OR, or $-NR_2$; and each R preferably independently represents a methyl group or *tert*-butyl group.

In the compound represented by Formula 2, examples of $Z^1$ include those exemplified for $Z^1$ in the compound represented by Formula 1.

Specific examples of the compound represented by Formula 2 are described below, but the compound represented by Formula 2 is not limited to these.

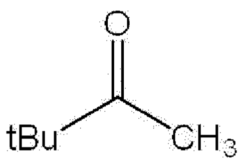
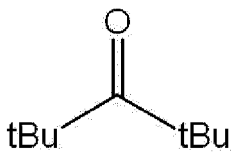
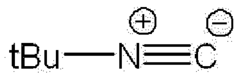
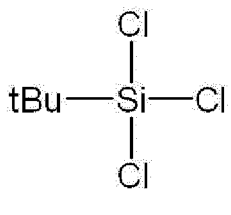
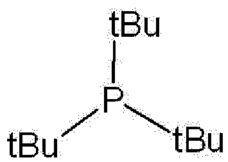
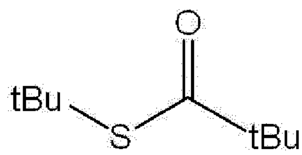

<Compound Represented by Formula 3>

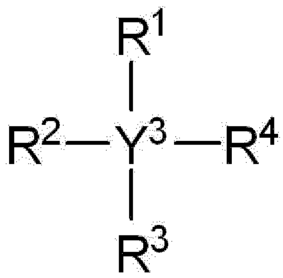

(3)

In Formula 3, $Y^3$ represents a carbon atom or a silicon atom.

$R^1$ to $R^4$ each independently represent a methyl group, *tert*-butyl group, or *tert*-butoxy group.

Specific examples of the compound represented by Formula 3 are described below, but the compound represented by Formula 3 is not limited to these.

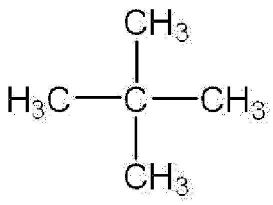

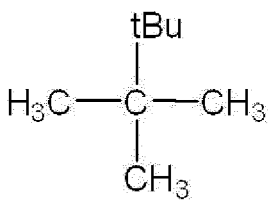

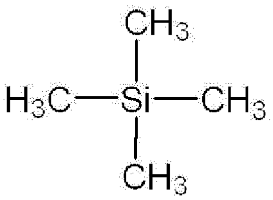

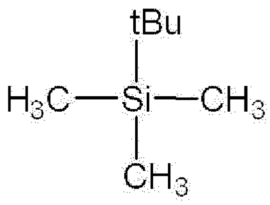

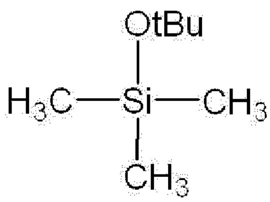

From the viewpoint of increasing the polymerization rate and the molecular weight, $Y^3$ in Formula 3 is preferably a carbon atom.

Further, from the viewpoint of increasing the polymerization rate and the molecular weight, $R^1$ to $R^4$ in Formula 3 are preferably methyl groups.

<Compound Represented by Formula 4>

$$CH_3\text{-}Z^2 \qquad (4)$$

In Formula 4, $Z^2$ is the group represented by the following Formula T14.

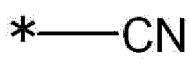

(T14)

Thus, the compound represented by Formula 4 is acetonitrile.

When a compound in the polymerization solvent A not only corresponds to a compound represented by Formula 1, but also corresponds to a compound represented by Formula 2, this compound is regarded as a compound represented by Formula 1. Thus, the compounds represented by Formula 2 do not include the compounds represented by Formula 1. In the polymerization solvent A, when a compound not only corresponds to a compound represented by Formula 1, but also corresponds to a compound represented by Formula 3, the compound is regarded as a compound represented by Formula 1. Thus, the compounds represented by Formula 3 do not include the compounds represented by Formula 1.

For example, methyl pivalate and *tert*-butyl pivalate not only correspond to compounds represented by Formula 1, but also correspond to compounds represented by Formula 2. However, they are regarded as compounds represented by Formula 1. Thus, the compounds represented by Formula 2 do not include methyl pivalate and *tert*-butyl pivalate. Di-*tert*-butyl ether not only corresponds to a compound represented by Formula 1, but also corresponds to a compound represented by Formula 3. However, it is regarded as a compound represented by Formula 1. Thus, the compounds represented by Formula 3 do not include di-*tert*-butyl ether.

<Other Polymerization Solvents>

In the method of producing a fluorine-containing copolymer of the disclosure, the polymerization medium may also contain a polymerization solvent other than the polymerization solvent A. However, from the viewpoint of increasing the polymerization rate, the polymerization medium preferably does not contain other polymerization media, and is preferably composed only of the polymerization solvent A.

Examples of the other polymerization solvent include aromatic hydrocarbon solvents such as benzene, toluene, and xylene; sulfoxide solvents such as dimethyl sulfoxide (DMSO); ketone solvents such as acetone and 2-butanone (methyl ethyl ketone); ether solvents such as tetrahydrofuran (THF) and dioxane; ester solvents such as ethyl acetate; and halogen-containing solvents such as hexafluoroisopropanol, chloroform, 1*H*-perfluorohexane, 1*H*,1*H*,1*H*,2*H*,2*H*-perfluorooctane, 1,3-bis(trifluoromethyl)benzene, 1,4-bis(trifluoromethyl)benzene, benzotrifluoride, chlorobenzene, and 1,2-dichlorobenzene.

(Monomers Including Ethylene and Tetrafluoroethylene)

In the method of producing a fluorine-containing copolymer of the disclosure, monomers including ethylene and tetrafluoroethylene are polymerized. Thus, the fluorine-containing copolymer obtained by the method of producing a fluorine-containing copolymer of the disclosure includes a structural unit derived from ethylene (hereinafter also referred to as "E unit") and a structural unit derived from tetrafluoroethylene (hereinafter also referred to as "TFE unit").

The monomers used for the polymerization may also include a monomer other than ethylene and tetrafluoroethylene. Thus, the fluorine-containing copolymer may also include a structural unit other than the E unit and the TFE unit.

Examples of the monomer other than ethylene and tetrafluoroethylene include the following monomers (1) to (7). The other monomer may be one kind of monomer, or may be two or more kinds of monomers.

Monomer (1): a compound represented by $CH_2=CX^{11}(CF_2)_nY^{11}$.

In the formula, $X^{11}$ and $Y^{11}$ are each independently a hydrogen atom or fluorine atom, and n is an integer from 2 to 8.

Monomer (2): a fluoroolefin containing a hydrogen atom in an ethylenic unsaturated group, such as vinylidene fluoride, vinyl fluoride, trifluoroethylene, or hexafluoroisobutylene.

Monomer (3): a fluoroolefin not containing a hydrogen atom in an ethylenic unsaturated group, such as hexafluoropropylene (however, TFE is excluded).

Monomer (4): perfluoro(alkyl vinyl ether), such as perfluoro(methyl vinyl ether), perfluoro(ethyl vinyl ether), perfluoro(propyl vinyl ether), or perfluoro(butyl vinyl ether).

Monomer (5): perfluoro(vinyl alkenyl ether) having two ethylenic unsaturated bonds and capable of cyclopolymerization, such as $CF_2=CFOCF_2CF=CF_2$ or $CF_2=CFO(CF_2)_2CF=CF_2$.

Monomer (6): a fluorine-containing monomer containing an alicyclic structure, such as perfluoro(2,2-dimethyl-1,3-dioxole), 2,2,4-trifluoro-5-trifluoromethoxy-1,3-dioxole, or perfluoro(2-methylene-4-methyl-1,3-dioxolane).

Monomer (7): a monomer containing a polar functional group, but not containing a fluorine atom (hereinafter also referred to as a polar functional group-containing monomer).

Examples of the polar functional group include a hydroxy group, a carboxy group, an epoxy group, and an acid anhydride residue. In particular, the polar functional group is preferably an acid anhydride residue.

Examples of the polar functional group-containing monomer include vinyl ethers containing a hydroxy group and an epoxy group; unsaturated carboxylic acids (such as maleic acid, itaconic acid, citraconic acid, and undecylenic acid); and unsaturated polycarboxylic acid anhydrides (such as maleic anhydride, itaconic anhydride, citraconic anhydride, and himic anhydride).

Among the monomers (1) to (7), monomer (1) is preferred from the viewpoint of the fact that it has high reactivity with ethylene and tetrafluoroethylene. Specific examples of monomer (1) include $CH_2=CF(CF_2)_2F$, $CH_2=CF(CF_2)_3F$, $CH_2=CF(CF_2)_4F$, $CH_2=CF(CF_2)_5F$, $CH_2=CF(CF_2)_8F$, $CH_2=CF(CF_2)_2H$, $CH_2=CF(CF_2)_3H$, $CH_2=CF(CF_2)_4H$, $CH_2=CF(CF_2)_5H$, $CH_2=CF(CF_2)_8H$, $CH_2=CH(CF_2)_2F$, $CH_2=CH(CF_2)_3F$, $CH_2=CH(CF_2)_4F$, $CH_2=CH(CF_2)_5F$, $CH_2=CH(CF_2)_6F$, $CH_2=CH(CF_2)_8F$, $CH_2=CH(CF_2)_2H$, $CH_2=CH(CF_2)_3H$, $CH_2=CH(CF_2)_4H$, $CH_2=CH(CF_2)_5H$, and $CH_2=CH(CF_2)_8H$. In particular, monomer (1) is preferably $CH_2=CH(CF_2)_nF$. The integer n in monomer (1) is from 2 to 8, preferably from 3 to 7, more preferably from 4 to 6.

Among the monomers used in the polymerization, the content of the other monomer is preferably from 0.001 mol% to 20 mol%, more preferably from 0.1 mol% to 15 mol%, still more preferably from 0.2 mol% to 5 mol%, with respect to the total amount of monomers. When the other monomer is monomer (7), its content is preferably from 0.01 mol% to 5 mol%, more preferably from 0.05 mol% to 3 mol%, still more preferably from 0.1 mol% to 1 mol%.

The content molar ratio between ethylene and tetrafluoroethylene (ethylene/ tetrafluoroethylene) is preferably from 20/80 to 80/20, more preferably from 70/30 to 30/70, still more preferably from 50/50 to 35/65.

(Polymerization Initiator)

In the method of producing a fluorine-containing copolymer of the disclosure, a polymerization initiator is preferably used for initiating the polymerization reaction.

The polymerization initiator is preferably a radical polymerization initiator. Examples of the radical polymerization initiator include azo compounds such as azobisisobutyronitrile and 2,2'-azobis(4-methoxy-2,4-dimethylvaleronitrile); peroxydicarbonates such as diisopropyl peroxydicarbonate; peroxy esters such as *tert*-butyl peroxypivalate, *tert*-butyl peroxyisobutyrate, and *tert*-butyl peroxyacetate; non-fluorine-containing diacyl peroxides such as diisobutyryl peroxide, octanoyl peroxide, benzoyl peroxide, and lauroyl peroxide; fluorine-containing diacyl peroxides such as $(Z(CF_2)_pCOO)_2$ (wherein Z is a hydrogen atom, fluorine atom, or chlorine atom, and p is an integer from 1 to 10); perfluoro-*tert*-butyl peroxide; and inorganic peroxides such as potassium persulfate, sodium persulfate, and ammonium persulfate.

(Chain Transfer Agent)

In the method of producing a fluorine-containing copolymer of the disclosure, the polymerization reaction may be carried out in the presence of a chain transfer agent. In the presence of the chain transfer agent, the molecular weight of the fluorine-containing copolymer to be produced can be easily controlled.

Examples of the chain transfer agent include alcohols such as methanol, ethanol, 2,2,2-trifluoroethanol, 2,2,3,3-tetrafluoropropanol, 1,1,1,3,3,3-hexafluoroisopropanol, and 2,2,3,3,3-pentafluoropropanol; hydrocarbons such as *n*-pentane, *n*-hexane, and cyclohexane; hydrofluorocarbons such as $CF_2H_2$; ketones such as acetone; mercaptans such as methyl mercaptan; esters such as methyl acetate and ethyl acetate; and ethers such as diethyl ether and methyl ethyl ether.

(Polymerization Method)

The polymerization in the method of producing a fluorine-containing copolymer of the disclosure is solution polymerization. Solution polymerization is a polymerization method in which polymerization is carried out in a state where monomers are dissolved in a polymerization medium. Solution polymerization can be distinguished from emulsion polymerization and suspension polymerization, in which polymerization is carried out in a state where monomers are dispersed in a polymerization medium.

In the method of producing a fluorine-containing copolymer of the disclosure, polymerization reaction is allowed to proceed by, for example, continuously or intermittently adding monomers including ethylene and tetrafluoroethylene to a polymerization medium.

(Polymerization Conditions)

In the method of producing a fluorine-containing copolymer of the disclosure,

$$0.5 < M_{sol} \times S/M_{mon} < 1.0$$

(wherein $M_{sol}$ is the amount of substance (mol) of the polymerization solvent A; S is the total solubility (mol/mol) of ethylene and tetrafluoroethylene in the polymerization solvent A; and $M_{mon}$ is the total amount of substance (mol) of ethylene and tetrafluoroethylene dissolved in the polymerization medium)
is preferably satisfied in a stage during the polymerization.

In the disclosure, the term "during the polymerization" means the time during which a fluorine-containing copolymer containing ethylene and tetrafluoroethylene is produced.

In cases where the polymerization medium is composed only of the polymerization solvent A, and where no polymerization medium other than the polymerization solvent A is contained, $M_{sol} \times S/M_{mon}$ is1.0. In cases where the polymerization medium contains a polymerization medium other than the polymerization solvent A, $M_{sol} \times S/M_{mon}$ isless than 1.0.

In cases where $M_{sol} \times S/M_{mon}$ is from 0.5 to 1.0, chain transfer by the polymerization medium can be suppressed to increase the polymerization rate. From the viewpoint of further increasing the polymerization rate, $M_{sol} \times S/M_{mon}$ is more preferably from 0.7 to 1.0, still more preferably from 0.85 to 1.0.

<Amount of Substance of Polymerization Solvent A, $M_{sol}$>

$M_{sol}$, which represents the amount of substance of the polymerization solvent A, is calculated using the following equation.

$$M_{sol}\ (\text{mol}) = \text{weight (g) of the polymerization solvent A/molecular weight of the polymerization solvent A}$$

As the weight of the polymerization solvent A, a value obtained by measurement under atmospheric pressure is employed.

(Total Solubility S of Ethylene and Tetrafluoroethylene in Polymerization Solvent A>

The total solubility S of ethylene and tetrafluoroethylene in the polymerization solvent A is calculated by the following method.

First, the vapor pressure of the polymerization solvent A, $P_{sol}$, is measured. $P_{sol}$ is defined as a pressure determined by placing a polymerization medium in a stainless-steel autoclave equipped with a stirrer, carrying out degassing by freeze-pump-thaw twice, keeping the internal temperature of the reactor at a predetermined temperature T, and then observing the pressure. T means the liquidus temperature. The temperature of the gas-phase is regarded as the same as the liquidus temperature.

In a stainless-steel autoclave equipped with a stirrer, weighed polymerization solvent A is added. Based on the weight (g) of the weighed polymerization solvent A, the amount of substance of the polymerization solvent A, M' (mol), is calculated.

Subsequently, a weighed mixed gas of ethylene and tetrafluoroethylene is fed into the stainless-steel autoclave equipped with a stirrer. At this time, the mixing ratio (molar ratio) between ethylene and tetrafluoroethylene is defined as ethylene: tetrafluoroethylene = x: y. The amount of the mixed gas of ethylene and tetrafluoroethylene, $M_{all}$ (mol), is calculated according to the following equation using the weight of the weighed mixed gas, W (g).

$$M_{all} = W/(28x + 100y)$$

After a sufficient length of time, the pressure becomes constant. This pressure is defined as the total pressure $P_{all}$.

The partial pressure of the mixed gas of ethylene and tetrafluoroethylene, $P_{mon}$, is calculated according to the following equation.

$$P_{mon} = P_{all} - P_{sol}$$

The volume of the gas-phase of the stainless-steel autoclave equipped with a stirrer, V, is calculated according to the following equation.

$$V = \text{internal capacity of the stainless-steel autoclave equipped with a stirrer} - \text{volume of the polymerization solvent A}$$

The amount of substance of the mixed gas of ethylene and tetrafluoroethylene present in the gas-phase in the stainless-steel autoclave equipped with a stirrer, $M_g$ (mol), is calculated according to the following equation. R means the gas constant.

$$M_g = P_{mon}V/RT$$

The amount of substance of the mixed gas of ethylene and tetrafluoroethylene dissolved in the polymerization solvent A, $M'_{mon}$ (mol), is calculated according to the following equation.

$$M'_{mon} = M_{all} - M_g$$

The total solubility of ethylene and tetrafluoroethylene in the polymerization solvent A, S, is calculated according to the following equation.

$$S = M'_{mon}/M'$$

<Total Amount of Substance of Ethylene and Tetrafluoroethylene Dissolved in Polymerization Medium, $M_{mon}$>

The total amount of substance of ethylene and tetrafluoroethylene dissolved in the polymerization medium, $M_{mon}$, is calculated by the following method.

First, the vapor pressure of the polymerization medium, $P'_{sol}$, is measured. $P'_{sol}$ is defined as a pressure determined by adding a polymerization medium in a stainless-steel autoclave equipped with a stirrer, carrying out degassing by freeze-pump-thaw twice, keeping the internal temperature of the reactor at a predetermined temperature T, and then observing the pressure. T means the liquidus temperature. The temperature of the gas-phase is regarded as the same as the liquidus temperature.

Subsequently, a weighed mixed gas of ethylene and tetrafluoroethylene is fed into the stainless-steel autoclave equipped with a stirrer. At this time, the mixing ratio (molar ratio) between ethylene and tetrafluoroethylene is defined as ethylene: tetrafluoroethylene = x: y. The feeding amount of the mixed gas of ethylene and tetrafluoroethylene, $M'_{all}$ (mol), is calculated according to the following equation using the weight of the weighed mixed gas, W' (g).

$$M'_{all} = W'/(28x + 100y)$$

After a sufficient length of time, the pressure becomes constant. This pressure is defined as the total pressure $P'_{all}$.

The partial pressure of the mixed gas of ethylene and tetrafluoroethylene, $P'_{mon}$, is calculated according to the following equation.

$$P'_{mon} = P'_{all} - P'_{sol}$$

The volume of the gas-phase of the stainless-steel autoclave equipped with a stirrer, V', is calculated according to the following equation.

$$V' = \text{internal capacity of the stainless-steel autoclave equipped with a stirrer} - \text{volume of the polymerization medium}$$

The amount of substance of the mixed gas of ethylene and tetrafluoroethylene present in the gas-phase in the stainless-steel autoclave equipped with a stirrer, $M'_g$ (mol), is calculated according to the following equation. R means the gas constant.

$$M'_g = P'_{mon} \times V'/RT$$

The amount of substance of the mixed gas of ethylene and tetrafluoroethylene dissolved in the polymerization medium, $M_{mon}$ (mol), is calculated according to the following equation.

$$M_{mon} = M'_{all} - M'_g$$

In the method of producing a fluorine-containing copolymer of the disclosure, the polymerization temperature is preferably from 0°C to 100°C, more preferably from 20°C to 90°C. The polymerization pressure is preferably from 0.1 MPaG to 10 MPaG, more preferably from 0.5 MPaG to 3 MPaG. The polymerization time is preferably from 1 hour to 30 hours, more preferably from 2 hours to 20 hours.

[Fluorine-Containing Polymer]

The fluorine-containing copolymer of the disclosure includes structural units derived from ethylene and tetrafluoroethylene.

The fluorine-containing copolymer of the disclosure includes an E unit and a TFE unit, and may also include a structural unit other than the E unit and the TFE unit.

Examples of the other structural unit include structural units derived from the monomers (1) to (7) exemplified as monomers other than ethylene and tetrafluoroethylene.

In the fluorine-containing copolymer of the disclosure, the ratio of the other structural unit other than the E unit and the TFE unit is preferably from 0.001 mol% to 20 mol%, more preferably from 0.1 mol% to 15 mol%, still more preferably from 0.2 to 5 mol%, with respect to the total amount of the fluorine-containing copolymer. When the other monomer is monomer (7), its content is preferably from 0.01 mol% to 5 mol%, more preferably from 0.05 mol% to 3 mol%, still more preferably from 0.1 mol% to 1 mol%.

The content molar ratio between the E unit and TFE unit (E unit/TFE unit) is preferably from 20/80 to 80/20, more preferably from 70/30 to 30/70, still more preferably from 50/50 to 35/65.

(End Groups)

In the fluorine-containing copolymer of the disclosure, the amount of substance of end groups derived from at least one polymerization solvent A selected from the group consisting of compounds represented by the following Formula 1 to Formula 4 is from 0.1 μmol/g to 100 μmol/g with respect to the total mass of the fluorine-containing copolymer.

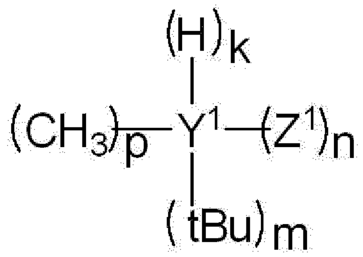

(1)

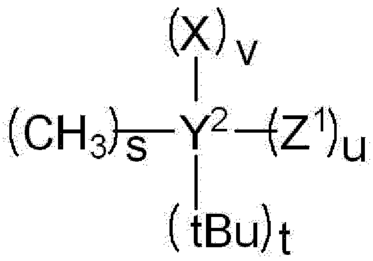

(2)

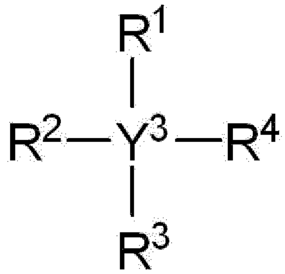

(3)

$CH_3\text{-}Z^2$ (4)

In Formula 1,

$Y^1$ represents a nitrogen atom or an oxygen atom;
when $Y^1$ is a nitrogen atom, p, m, n, and k are each independently an integer satisfying $p + m > 1$ and $p + m + n + k = 3$;
when $Y^1$ is an oxygen atom, p, m, n, and k are each independently an integer satisfying $p + m > 1$ and $p + m + n + k = 2$; and
when p is not less than 1, n is not less than 1.

In Formula 2,

$Y^2$ represents a carbon atom, a silicon atom, a phosphorus atom, or a sulfur atom;
when $Y^2$ is a carbon atom or a silicon atom, s, t, u, and v are each independently an integer satisfying $s + t > 1$ and $s + t + u + v = 4$;
when $Y^2$ is a phosphorus atom, s, t, u, and v are each independently an integer satisfying $s + t > 1$ and $s + t + u + v = 3$;
when $Y^2$ is a sulfur atom, s, t, u, and v are each independently an integer satisfying $s + t > 1$ and $s + t + u + v = 2$;
when s is not less than 1, u is not less than 1; and
each X independently represents a chlorine atom or a bromine atom.

In Formula 1 and Formula 2,
each $Z^1$ is independently a group represented by any one of the following Formulae T1 to T14.
In Formula 3,

$Y^3$ represents a carbon atom or a silicon atom; and
$R^1$ to $R^4$ each independently represent a methyl group, a *tert*-butyl group, or a *tert*-butoxy group.

In Formula 4,
$Z^2$ is the group represented by the following Formula T14.

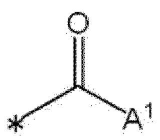
(T1)

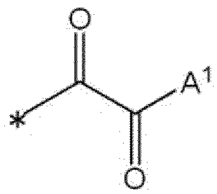
(T2)

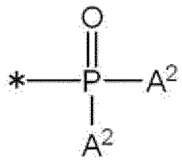
(T3)

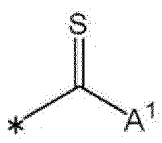
(T4)

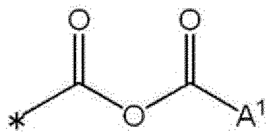
(T5)

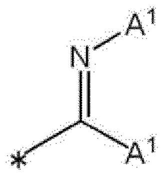
(T6)

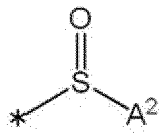
(T7)

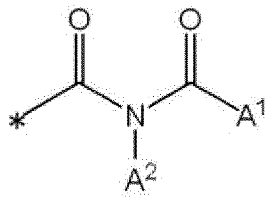

(T8)

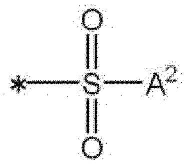

(T9)

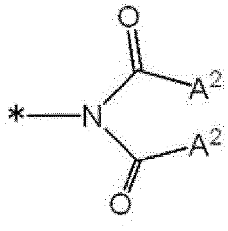

(T10)

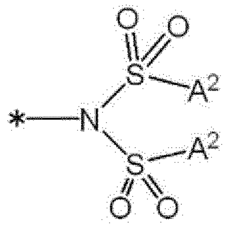

(T11)

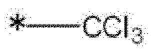

(T12)

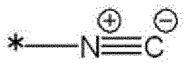

(T13)

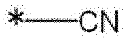

(T14)

In Formulae T1 to T14, each $A^1$ independently represents a hydrogen atom, a chlorine atom, a methyl group, a *tert*-butyl group, -OR, $-NR_2$, or -SR; each $A^2$ independently represents a chlorine atom, a methyl group, a *tert*-butyl group, -OR, $-NR_2$, or -SR; each R independently represents a methyl group or *tert*-butyl group; and * represents a bonding site.

In the disclosure, the term "end group" means an atom or atomic group bound to a terminal atom forming a main chain. Examples of the end group do not include a hydrogen atom, and X in Formula (2).

The amount of substance of end groups derived from the polymerization solvent A with respect to the total mass of the fluorine-containing copolymer is preferably from 0.5 μmol/g to 20.0 μmol/g, more preferably from 1.0 μmol/g to 10.0 μmol/g.

The amount of substance of end groups derived from the polymerization solvent A with respect to the total mass of the fluorine-containing copolymer is measured using the following method.

First, for each polymerization solvent, a peak wavelength in the higher wavelength side relative to 1500 $cm^{-1}$ is investigated, and the molar extinction coefficient at the investigated peak wavelength is calculated.

Each polymerization solvent, and the peak wavelength investigated therefor, are described below.

Dimethyl carbonate (DMC): from 1700 to 1800 $cm^{-1}$
Methyl pivalate (MePiv): from 1700 to 1800 $cm^{-1}$
*tert*-Butyl alcohol (*t*-BuOH): from 3300 to 3600 $cm^{-1}$
Di-*tert*-butyl carbonate (BoczO): from 1700 to 1800 $cm^{-1}$
*N,N*-Dimethylformamide (DMF): from 1600 to 1800 $cm^{-1}$
Trimethyl phosphate (TMP): from 3300 to 3600 $cm^{-1}$
Acetonitrile ($CH_3CN$): from 2000 to 2500 $cm^{-1}$
Di-*tert*-butyl ketone: from 1500 to 1800$cm^{-1}$
2-Chloro-2,4,4-trimethyl-3-pentanone: from 1500 to 1800 $cm^{-1}$
*tert*-Butyl methyl sulfoxide: from 1000 to 1200 $cm^{-1}$
*tert*-Butyl methyl sulfone: from 1000 to 1400 $cm^{-1}$

Using the calculated molar extinction coefficient, the concentration after incorporation of the polymerization solvent into the polymer is calculated according to the Lambert-Beer's law.

$$\text{Absorbance A} = \varepsilon c d$$

In the equation, ε means the molar extinction coefficient (mL/(mol·cm)); c means the polymer concentration (mol/mL) in the solution; and d means the optical path length (cm).

According to ASTM-D792, the polymer density is measured. Further, the sample IR transmission volume is calculated according to the following equation.

$$\text{Sample IR transmission volume} = \text{IR bean diameter} \times \text{polymer thickness}$$

From the obtained polymer concentration (mol/mL), the amount of substance of end groups is calculated using the polymer density and the IR transmission volume.

Examples

The disclosure is more concretely described below by way of Examples. However, the disclosure is not limited to the following Examples as long as the spirit of the disclosure is not spoiled.

[Example 1]

A stainless-steel autoclave having an internal capacity of 600 mL equipped with a stirrer was immersed in an ice water bath for 10 minutes, and then 360 mL (4.29 mol) of dimethyl carbonate ("DMC" in the table) as a polymerization medium was added in the autoclave, followed by degassing by freeze-pump-thaw twice.

The internal temperature of the reactor was increased to 30°C with stirring, and a mixed gas of ethylene and tetrafluoroethylene (ethylene: tetrafluoroethylene (molar ratio) = 50:50) as monomers was injected such that the internal pressure of the reactor increesed to 1.5 MPaG. Further, as a polymerization initiator, 21.9 mg (0.126 mmol) of diisobutyryl peroxide (product name, "PEROYL IB"; manufactured by NOF Corporation; "IBPO" in the table) was injected, and the reaction mixture was stirred at 200 rpm (200 revolutions per minute) for 3 hours while the internal temperature was kept at 30°C. By this, a polymer solution containing a copolymer of ethylene and tetrafluoroethylene was obtained.

The reactor was allowed to cool at room temperature, and unreacted ethylene and tetrafluoroethylene were discharged.

The obtained polymer solution was added to methanol, and the precipitate was collected by filtration. The precipitate was dried in a vacuum oven at 40°C for 12 hours. As a result, 33.9 g of a copolymer of ethylene and tetrafluoroethylene was obtained.

Dimethyl carbonate corresponds to the compound represented by Formula 1 in which $Y^1$ is an oxygen atom; p is 1; m is 0; n is 1; k is 0; and $Z^1$ is the group represented by T1 in which $A^1$ is -OR, and R is a methyl group.

[Example 2]

A copolymer of ethylene, tetrafluoroethylene, and perfluorobutyl ethylene was obtained by the same method as in Example 1 except that, at the time when the dimethyl carbonate as a polymerization medium was added, 2.64 g (10.7 mmol) of perfluorobutyl ethylene as monomers was also added.

[Example 3]

A copolymer of ethylene, tetrafluoroethylene, and perfluorobutyl ethylene was obtained by the same method as in Example 2 except that the polymerization initiator used was 2,2'-azobis(4-methoxy-2,4-dimethylvaleronitrile) (product name, "V70"; manufactured by Fujifilm Wako Pure Chemical Corporation; "AMVN" in the table), and that the polymerization temperature was 35°C.

[Example 4]

A copolymer of ethylene, tetrafluoroethylene, and perfluorobutyl ethylene was obtained by the same method as in Example 2 except that the polymerization initiator used was *tert*-butyl peroxypivalate (product name, "PERBUTYL PV"; manufactured by NOF Corporation; "PBPV" in the table), and that the polymerization temperature was 66°C.

[Example 5]

A copolymer of ethylene and tetrafluoroethylene was obtained by the same method as in Example 1 except that the polymerization medium was di-*tert*-butyl carbonate ("BoczO" in the table), that the polymerization initiator used was diisopropyl peroxydicarbonate (product name, "PEROYL IPP"; manufactured by NOF Corporation; "IPP" in the table), and that the polymerization temperature was 45°C.

Di-*tert*-butyl carbonate corresponds to the compound represented by Formula 1 in which $Y^1$ is an oxygen atom; p is 0; m is 1; n is 1; k is 0; and $Z^1$ is the group represented by T1 in which $A^1$ is -OR, and R is a *tert*-butyl group.

[Example 6]

A copolymer of ethylene and tetrafluoroethylene was obtained by the same method as in Example 1 except

that the polymerization medium was methyl pivalate ("MePiv" in the table).

Methyl pivalate corresponds to the compound represented by Formula 1 in which $Y^1$ is an oxygen atom; p is 1; m is 0; n is 1; k is 0; and $Z^1$ is the group represented by T1 in which $A^1$ is a *tert*-butyl group.

[Example 7]

A copolymer of ethylene and tetrafluoroethylene was obtained by the same method as in Example 1 except that the polymerization medium was *tert*-butyl alcohol ("*t*-BuOH" in the table).

*t*-Butanol corresponds to the compound represented by Formula 1 in which $Y^1$ is an oxygen atom; p is 0; m is 1; n is 0; and k is 0.

[Example 8]

A copolymer of ethylene and tetrafluoroethylene was obtained by the same method as in Example 1 except that the polymerization medium was *N*,*N*-dimethylformamide ("DMF" in the table).

*N,N*-dimethylformamide corresponds to the compound represented by Formula 1 in which $Y^1$ is a nitrogen atom; p is 2; m is 0; n is 1; k is 0; and $Z^1$ is the group represented by T1 in which $A^1$ is a hydrogen atom.

[Example 9]

A copolymer of ethylene and tetrafluoroethylene was obtained by the same method as in Example 5 except that the polymerization medium was tri-*tert*-butylphosphine ("TTBP" in the table), and that the polymerization temperature was 35°C.

Tri-*tert*-butylphosphine corresponds to the compound represented by Formula 2 in which $Y^2$ is a phosphorus atom; s is 0; t is 3; u is 0; and v is 0.

[Example 10]

A copolymer of ethylene and tetrafluoroethylene was obtained by the same method as in Example 1 except that the polymerization medium was trimethyl phosphate ("TMP" in the table).

Trimethyl phosphate corresponds to the compound represented by Formula 1 in which $Y^1$ is an oxygen atom; p is 1; m is 0; n is 1; k is 0; and $Z^1$ is the group represented by T3 in which $A^2$ is -OR, and R is a methyl group.

[Example 11]

A copolymer of ethylene and tetrafluoroethylene was obtained by the same method as in Example 1 except that the polymerization medium was tetramethylsilane ("TMS" in the table), and that the polymerization temperature was 25°C.

Tetramethylsilane corresponds to the compound represented by Formula 3 in which $Y^3$ is a silicon atom, and $R^1$ to $R^4$ are methyl groups.

[Example 12]

A copolymer of ethylene and tetrafluoroethylene was obtained by the same method as in Example 1 except that the polymerization medium was a mixture of dimethyl carbonate and methyl ethyl ketone ("MEK" in the table) (amount-of-substance ratio, 85:15) ("DMC/MEK = 85/15 in the table).

[Example 13]

A copolymer of ethylene and tetrafluoroethylene was obtained by the same method as in Example 1 except that the polymerization medium was a mixture of dimethyl carbonate and methyl ethyl ketone ("MEK" in the table) (amount-of-substance ratio, 70:30) ("DMC/MEK = 70/30" in the table).

[Example 14]

A copolymer of ethylene and tetrafluoroethylene was obtained by the same method as in Example 1 except that the polymerization medium was a mixture of acetonitrile ("$CH_3CN$" in the table) and dimethyl carbonate (amount-of-substance ratio, 50:50) ("$CH_3CN$/DMC = 50/50" in the table).

Acetonitrile corresponds to the compound represented by Formula 4 in which $Z^2$ is the group represented by T14.

[Example 15]

A copolymer of ethylene and tetrafluoroethylene was obtained by the same method as in Example 1 except that the polymerization medium was neopentane, and that the polymerization temperature was 20°C.
Neopentane corresponds to the compound represented by Formula 3 in which $Y^3$ is a carbon atom, and $R^1$ to $R^4$ are methyl groups.

[Example 16]

A copolymer of ethylene and tetrafluoroethylene was obtained by the same method as in Example 1 except that the polymerization medium was di-*tert*-butyl ketone purified by distillation.
Di-*tert*-butyl ketone corresponds to the compound represented by Formula 2 in which $Y^2$ is a carbon atom; s is 3; t is 0; u is 1; v is 0; and $Z^1$ is the group represented by T1 in which $A^1$ is a *tert*-butyl group.

[Example 17]

A copolymer of ethylene and tetrafluoroethylene was obtained by the same method as in Example 1 except that the polymerization medium was 2-chloro-2,4,4-trimethyl-3-pentanone.
2-Chloro-2,4,4-trimethyl-3-pentanone corresponds to the compound represented by Formula 2 in which $Y^2$ is a carbon atom; s is 2; t is 0; u is 1; v is 1; X is a chlorine atom; and $Z^1$ is the group represented by T1 in which $A^1$ is a *tert*-butyl group.

[Example 18]

A copolymer of ethylene and tetrafluoroethylene was obtained by the same method as in Example 1 except that the polymerization medium was *tert*-butyl methyl sulfoxide.
*tert*-Butyl methyl sulfoxide corresponds to the compound represented by Formula 2 in which $Y^2$ is a carbon atom; s is 3; t is 0; u is 1; v is 0; and $Z^1$ is the group represented by T7 in which $A^2$ is a methyl group.

[Example 19]

A copolymer of ethylene and tetrafluoroethylene was obtained by the same method as in Example 1 except that the polymerization medium was *tert*-butyl methyl sulfone.
*tert*-Butyl methyl sulfone corresponds to the compound represented by Formula 2 in which $Y^2$ is a carbon atom; s is 3; t is 0; u is 1; v is 0; and $Z^1$ is the group represented by T9 in which $A^2$ is a methyl group.

[Example 20]

An attempt was made to obtain a copolymer of ethylene and tetrafluoroethylene by the same method as in Example 1 except that the polymerization medium was acetone. However, the copolymer could not be obtained. Acetone does not correspond to the polymerization solvent A.

[Example 21]

An attempt was made to obtain a copolymer of ethylene and tetrafluoroethylene by the same method as in Example 1 except that the polymerization medium was *tert*-butyl methyl ether ("TBME" in the table). However, the copolymer could not be obtained. *tert*-Butyl methyl ether does not correspond to the polymerization solvent A.

[Example 22]

An attempt was made to obtain a copolymer of ethylene and tetrafluoroethylene by the same method as in Example 1 except that the polymerization medium was trimethyl phosphite ("$P(OMe)_3$" in the table). However, the copolymer could not be obtained. Trimethyl phosphite does not correspond to the polymerization solvent A.
The polymerization rate was measured for the production methods of Example 1 to Example 19, and the melt flow rate value (MFR value) and the amount of substance of end groups derived from the polymerization solvent A were measured for the copolymers obtained in Example 1 to Example 19. Further, $M_{sol} \times S/M_{mon}$ (wherein $M_{sol}$ is the amount

of substance (mol) of the polymerization solvent A; S is the total solubility (mol/mol) of ethylene and tetrafluoroethylene in the polymerization solvent A; and $M_{mon}$ is the total amount of substance (mol) of ethylene and tetrafluoroethylene dissolved in the polymerization medium) during the polymerization was calculated. The measurement methods and the calculation methods were as follows. In the table, "-" means that the measurement was impossible.

<Polymerization Rate>

The polymerization rate was calculated according to the following equation.
Polymerization rate (g/h·L) = yield (g) of the obtained copolymer/{polymerization time (h) · volume (L) of the polymerization solvent}
The polymerization solvent herein does not include the polymerization initiator.

<MFR Value>

The mass (g) of the copolymer that flowed out in 10 minutes from an orifice with a diameter of 2.095 mm and a length of 8.000 mm at a temperature of 297°C under a load of 49.0 N was measured using a thermal flow evaluation apparatus (product name, "FLOW TESTER CFT-100EX"; manufactured by Shimadzu Corporation) in accordance with ASTM D3159, to determine the MFR (g/10 minutes).

<Amount of Substance of End Groups Derived from Polymerization Solvent A>

First, for each polymerization solvent, a peak wavelength in the higher wavelength side relative to 1500 $cm^{-1}$ was investigated, and the molar extinction coefficient at the investigated peak wavelength was calculated.
Each polymerization solvent, and the peak wavelength investigated therefor, are described below.

Dimethyl carbonate (DMC): from 1700 to 1800$cm^{-1}$
Methyl pivalate (MePiv): from 1700 to 1800$cm^{-1}$
*tert*-Butyl alcohol (*t*-BuOH): from 3300 to 3600$cm^{-1}$
Di-*tert*-butyl carbonate (BoczO): from 1700 to 1800$cm^{-1}$
*N,N*-Dimethylformamide (DMF): from 1600 to 1800$cm^{-1}$
Trimethyl phosphate (TMP): from 3300 to 3600 $cm^{-1}$
Acetonitrile ($CH_3CN$): from 2000 to 2500 $cm^{-1}$
Di-*tert*-butyl ketone: from 1500 to 1800$cm^{-1}$
2-Chloro-2,4,4-trimethyl-3-pentanone: from 1500 to 1800 $cm^{-1}$
*tert*-Butyl methyl sulfoxide: from 1000 to 1200 $cm^{-1}$
*tert*-Butyl methyl sulfone: from 1000 to 1400 $cm^{-1}$

Using the calculated molar extinction coefficient, the concentration after incorporation of the polymerization solvent into the polymer was calculated according to the Lambert-Beer's law.

$$\text{Absorbance A} = \varepsilon cd$$

In the equation, ε means the molar extinction coefficient (mL/(mol·cm)), c means the polymer concentration (mol/mL) in the solution, and d means the optical path length (cm).
According to ASTM-D792, the polymer density was measured. Further, the sample IR transmission volume was calculated according to the following equation.

$$\text{Sample IR transmission volume} = \text{IR bean diameter} \times \text{polymer thickness}$$

From the obtained polymer concentration (mol/mL), the amount of substance of end groups was calculated using the polymer density and the IR transmission volume.

<$M_{sol} \times S/M_{mon}$>

First, $M_{sol}$, which is the amount of substance (mol) of the polymerization solvent A; S, which is the total solubility

(mol/mol) of ethylene and tetrafluoroethylene in the polymerization solvent A; and $M_{mon}$, which is the total amount of substance (mol) of ethylene and tetrafluoroethylene dissolved in the polymerization medium; were calculated as described above. Thereafter, $M_{sol} \times S/M_{mon}$ was calculated using $M_{sol}$, S, and $M_{mon}$.

Table 1 shows the types of the monomers, the polymerization medium, and the polymerization initiator; the amount of substance of end groups derived from the polymerization solvent A; the polymerization rate; and the MFR. "Binary system" indicates a case where ethylene and tetrafluoroethylene were used as the monomers, and "ternary system" indicates a case where ethylene, tetrafluoroethylene, and perfluorobutyl ethylene were used as the monomers.

[Table 1]

| | Monomers | Polymerization medium | Polymerization initiator | Amount of substance of end groups derived from polymerization solvent A [μmol/g] | Polymerization rate [g/(L·h)] | MFR [g/10 min] | Polymerization temperature [°C] | $M_{sol} \times S/M_{mon}$ |
|---|---|---|---|---|---|---|---|---|
| Example 1 | Binary system | DMC | IBPO | 0.91 | 37.0 | 0.1 | 30 | 0.99 |
| Example 2 | Ternary system | DMC | IBPO | 1.32 | 6.5 | 4.6 | 30 | 0.99 |
| Example 3 | Ternary system | DMC | AMVN | 1.33 | 4.9 | 5.0 | 35 | 0.99 |
| Example 4 | Ternary system | DMC | PBPV | 1.45 | 7.1 | 12.0 | 66 | 0.99 |
| Example 5 | Binary system | $Boc_2O$ | IPP | - | 3.8 | 5.9 | 45 | 0.99 |
| Example 6 | Binary system | MePiv | IBPO | 1.41 | 2.9 | 9.1 | 30 | 0.99 |
| Example 7 | Binary system | t-BuOH | IBPO | 1.35 | 2.3 | 6.1 | 30 | 0.99 |
| Example 8 | Binary system | DMF | IBPO | 1.97 | 1.0 | 190.0 | 30 | 0.99 |
| Example 9 | Binary system | TTBP | IPP | - | 14.0 | 2.8 | 35 | 0.99 |
| Example 10 | Binary system | TMP | IBPO | 1.37 | 5.8 | 7.1 | 30 | 0.99 |
| Example 11 | Binary system | TMS | IBPO | - | 12.5 | 7.9 | 25 | 0.99 |
| Example 12 | Binary system | DMC/MEK=85/15 (mol%) | IBPO | - | 24.7 | 58.7 | 30 | 0.84 |
| Example 13 | Binary system | DMC/MEK=70/30 (mol%) | IBPO | - | 5.9 | - | 30 | 0.69 |
| Example 14 | Binary system | $CH_3CN$/DMC=50/50 (mol%) | IBPO | 1.94 | 19.6 | 164.5 | 30 | 0.99 |

(continued)

| | Monomers | Polymerization medium | Polymerization initiator | Amount of substance of end groups derived from polymerization solvent A [μmol/g] | Polymerization rate [g/(L·h)] | MFR [g/10 min] | Polymerization temperature [°C] | $M_{sol} \times S/M_{mon}$ |
|---|---|---|---|---|---|---|---|---|
| Example 15 | Binary system | Neopentane | IBPO | - | 7.5 | 4.5 | 20 | 0.99 |
| Example 16 | Binary system | Di-*tert*-butyl ketone | IBPO | 1.18 | 27.3 | 1.2 | 30 | 0.99 |
| Example 17 | Binary system | 2-Chloro-2,4,4-trimethyl-3-pentanone | IBPO | 1.24 | 41.6 | 2.3 | 30 | 0.99 |
| Example 18 | Binary system | *tert*-Butyl methyl sulfoxide | IBPO | 2.32 | 0.7 | - | 30 | 0.99 |
| Example 19 | Binary system | *tert*-Butyl methyl sulfone | IBPO | 2.63 | 0.6 | - | 30 | 0.99 |
| Example 20 | Binary system | Acetone | IBPO | - | - | - | 30 | 0.99 |
| Example 21 | Binary system | TBME | IBPO | - | - | - | 30 | 0.99 |
| Example 22 | Binary system | $P(OMe_3)_3$ | IBPO | - | - | - | 30 | 0.99 |

It was found, as shown in Table 1, that Example 1 to Example 19 showed higher polymerization rates than conventional cases since solution polymerization was carried out using monomers including ethylene and tetrafluoroethylene, in a polymerization medium containing at least one polymerization solvent A selected from the group consisting of compounds represented by Formula 1 to Formula 4.

The disclosure of Japanese Patent Application No. 2021-002103, filed on January 8, 2021, is incorporated herein by reference in its entirety. All documents, patent applications, and technical standards cited in the present description are incorporated herein by reference to the same extent as in cases where the individual documents, patent applications, and technical standards are specifically and individually described to be incorporated by reference.

## Claims

1. A method of producing a fluorine-containing copolymer, the method comprising carrying out solution polymerization using monomers including ethylene and tetrafluoroethylene, in a polymerization medium containing at least one polymerization solvent A selected from the group consisting of compounds represented by the following Formula 1 to Formula 4:

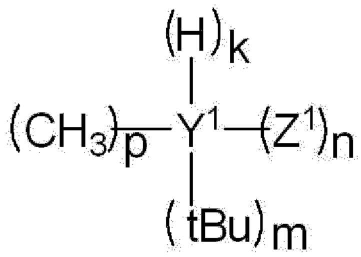

(1)

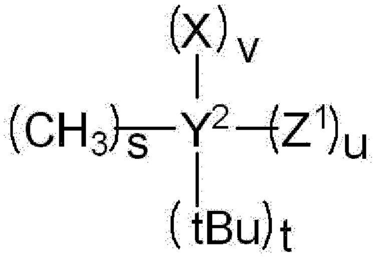

(2)

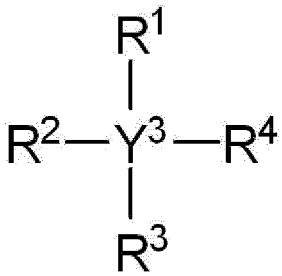

(3)

$CH_3$-$Z^2$ (4)

wherein, in Formula 1,

$Y^1$ represents a nitrogen atom or an oxygen atom;
when $Y^1$ is a nitrogen atom, p, m, n, and k are each independently an integer satisfying $p + m > 1$ and $p + m + n + k = 3$;
when $Y^1$ is an oxygen atom, p, m, n, and k are each independently an integer satisfying $p + m > 1$ and $p + m + n + k = 2$; and
when p is not less than 1, n is not less than 1;

wherein, in Formula 2,

$Y^2$ represents a carbon atom, a silicon atom, a phosphorus atom, or a sulfur atom;
when $Y^2$ is a carbon atom or a silicon atom, s, t, u, and v are each independently an integer satisfying $s + t > 1$ and $s + t + u + v = 4$;
when $Y^2$ is a phosphorus atom, s, t, u, and v are each independently an integer satisfying $s + t > 1$ and $s + t + u + v = 3$;
when $Y^2$ is a sulfur atom, s, t, u, and v are each independently an integer satisfying $s + t > 1$ and $s + t + u + v = 2$;
when s is not less than 1, u is not less than 1; and
each X independently represents a chlorine atom or a bromine atom;

wherein, in Formula 1 and Formula 2,
each $Z^1$ is independently a group represented by any one of the following Formulae T1 to T14;
wherein, in Formula 3,

$Y^3$ represents a carbon atom or a silicon atom; and
$R^1$ to $R^4$ each independently represent a methyl group, a tert-butyl group, or a *tert*-butoxy group; and

wherein, in Formula 4,

$Z^2$ is a group represented by the following Formula T14;

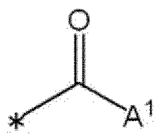
(T1)

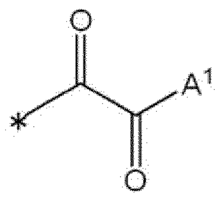
(T2)

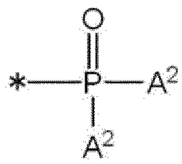
(T3)

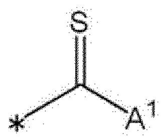
(T4)

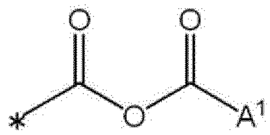
(T5)

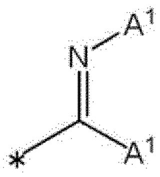
(T6)

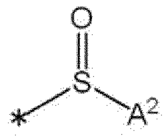
(T7)

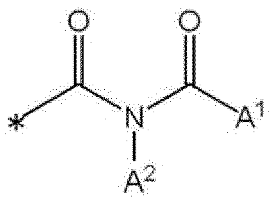
(T8)

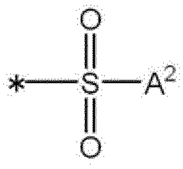
(T9)

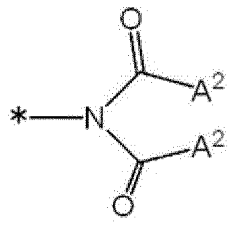
(T10)

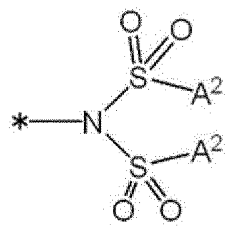
(T11)

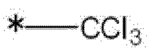
(T12)

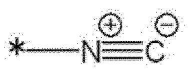
(T13)

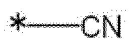
(T14)

wherein, in Formulae T1 to T14, each $A^1$ independently represents a hydrogen atom, a chlorine atom, a methyl group, a *tert*-butyl group, -OR, $-NR_2$, or -SR; each $A^2$ independently represents a chlorine atom, a methyl group, a *tert*-butyl group, -OR, $-NR_2$, or -SR; each R independently represents a methyl group or *tert*-butyl group; and * represents a bonding site.

**2.** The method of producing a fluorine-containing copolymer according to claim 1, wherein, in Formula 2, $Y^2$ represents a carbon atom, a silicon atom, or a sulfur atom.

**3.** The method of producing a fluorine-containing copolymer according to claim 1, wherein, in Formula 2, $Y^2$ represents a carbon atom or a silicon atom.

**4.** The method of producing a fluorine-containing copolymer according to any one of claims 1 to 3, wherein, in Formula 2, X represents a chlorine atom.

**5.** The method of producing a fluorine-containing copolymer according to any one of claims 1 to 4, wherein, in Formulae T1 to T14, each $A^1$ independently represents a methyl group, a *tert*-butyl group, -OR, or $-NR_2$; each $A^2$ independently represents a methyl group, a *tert*-butyl group, -OR, or $-NR_2$; and each R independently represents a methyl group or a *tert*-butyl group.

**6.** The method of producing a fluorine-containing copolymer according to any one of claims 1 to 5, wherein, in Formula 1 and Formula 2, each $Z^1$ is independently a group represented by any one of Formulae T1 to T7.

**7.** The method of producing a fluorine-containing copolymer according to any one of claims 1 to 6, wherein, in Formula 1 and Formula 2, each $Z^1$ is independently a group represented by any one of Formulae T1 to T3.

**8.** The method of producing a fluorine-containing copolymer according to any one of claims 1 to 7, wherein, in Formula 3, $Y^3$ represents a carbon atom.

**9.** The method of producing a fluorine-containing copolymer according to any one of claims 1 to 8, wherein, in a stage during the polymerization, the following inequation is satisfied:

$$0.5 < M_{sol} \times S/M_{mon} < 1.0$$

wherein $M_{sol}$ is an amount of substance (mol) of the polymerization solvent A; S is a total solubility (mol/mol) of the ethylene and the tetrafluoroethylene in the polymerization solvent A; and $M_{mon}$ is a total amount of substance (mol) of the ethylene and the tetrafluoroethylene dissolved in the polymerization medium.

**10.** A fluorine-containing copolymer comprising structural units derived from ethylene and tetrafluoroethylene, wherein an amount of substance of end groups derived from at least one polymerization solvent A selected from the group consisting of compounds represented by the following Formula 1 to Formula 4 is from 0.1 μmol/g to 100 μmol/g with respect to a total mass of the fluorine-containing copolymer:

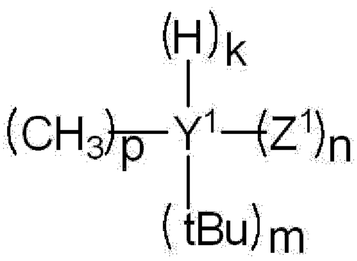
(1)

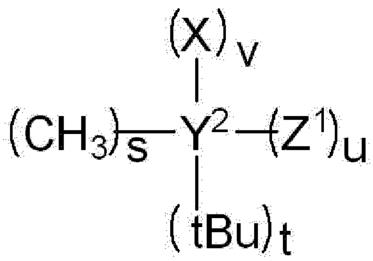

(2)

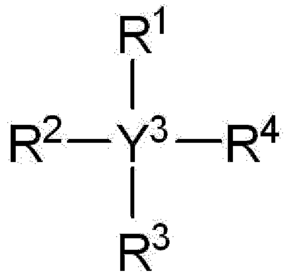

(3)

$CH_3$-$Z^2$ (4)

wherein, in Formula 1,

$Y^1$ represents a nitrogen atom or an oxygen atom;
when $Y^1$ is a nitrogen atom, p, m, n, and k are each independently an integer satisfying $p + m > 1$ and $p + m + n + k = 3$;
when $Y^1$ is an oxygen atom, p, m, n, and k are each independently an integer satisfying $p + m > 1$ and $p + m + n + k = 2$; and
when p is not less than 1, n is not less than 1;

wherein, in Formula 2,

$Y^2$ represents a carbon atom, a silicon atom, a phosphorus atom, or a sulfur atom;
when $Y^2$ is a carbon atom or a silicon atom, s, t, u, and v are each independently an integer satisfying $s + t > 1$ and $s + t + u + v = 4$;
when $Y^2$ is a phosphorus atom, s, t, u, and v are each independently an integer satisfying $s + t > 1$ and $s + t + u + v = 3$;
when $Y^2$ is a sulfur atom, s, t, u, and v are each independently an integer satisfying $s + t > 1$ and $s + t + u + v = 2$;
when s is not less than 1, u is not less than 1; and
each X independently represents a chlorine atom or a bromine atom;

wherein, in Formula 1 and Formula 2,
each $Z^1$ is independently a group represented by any one of the following Formulae T1 to T14;
wherein, in Formula 3,

$Y^3$ represents a carbon atom or a silicon atom; and
$R^1$ to $R^4$ each independently represent a methyl group, a tert-butyl group, or a *tert*-butoxy group; and

wherein, in Formula 4,

$Z^2$ is a group represented by the following Formula T14;

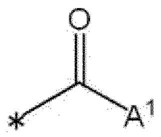

(T1)

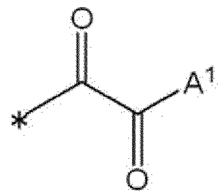

(T2)

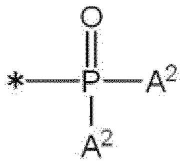

(T3)

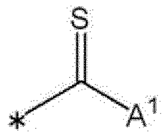

(T4)

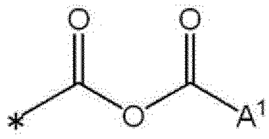

(T5)

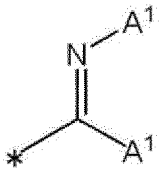

(T6)

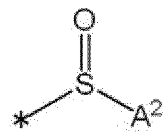

(T7)

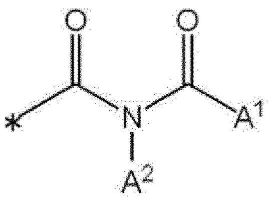

(T8)

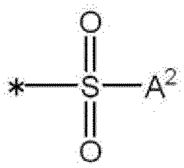

(T9)

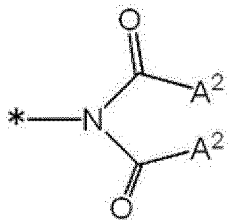

(T10)

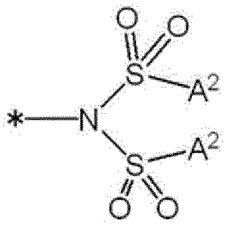

(T11)

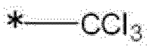

(T12)

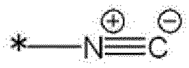

(T13)

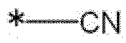

(T14)

wherein, in Formulae T1 to T14, each $A^1$ independently represents a hydrogen atom, a chlorine atom, a methyl group, a *tert*-butyl group, -OR, $-NR_2$, or -SR; each $A^2$ independently represents a chlorine atom, a methyl group, a *tert*-butyl group, -OR, $-NR_2$, or -SR; each R independently represents a methyl group or a *tert*-butyl group; and * represents a bonding site.

## INTERNATIONAL SEARCH REPORT

International application No.
**PCT/JP2021/048650**

### A. CLASSIFICATION OF SUBJECT MATTER

***C08F 210/02***(2006.01)i; ***C08F 214/26***(2006.01)i; ***C08F 2/06***(2006.01)i
FI: C08F2/06; C08F210/02; C08F214/26

According to International Patent Classification (IPC) or to both national classification and IPC

### B. FIELDS SEARCHED

Minimum documentation searched (classification system followed by classification symbols)

C08C19/00-19/44, C08F2/00-2/60, 6/00-246/00, 301/00

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

CAplus/REGISTRY (STN), CASREACT (STN), JSTPlus/JMEDPlus/JST7580 (JDreamIII)

### C. DOCUMENTS CONSIDERED TO BE RELEVANT

| Category* | Citation of document, with indication, where appropriate, of the relevant passages | Relevant to claim No. |
|---|---|---|
| X | JP 47-2853 B1 (JAPAN ATOMIC ENERGY RESEARCH INSTITUTE) 26 January 1972 (1972-01-26)<br>claims, example 1 | 1-10 |
| X | JP 8-67718 A (CENTRAL GLASS CO LTD) 12 March 1996 (1996-03-12)<br>claims, examples | 1-10 |
| X | WO 2020/226178 A1 (DAIKIN IND LTD) 12 November 2020 (2020-11-12)<br>claims, paragraph [0076] | 1-10 |
| X<br>A | JP 6-298810 A (ASAHI GLASS CO LTD) 25 October 1994 (1994-10-25)<br>claims, paragraphs [0017]-[0018] | 1-8, 10<br>9 |
| X | WO 2018/164147 A1 (AGC INC) 13 September 2018 (2018-09-13)<br>claims, paragraphs [0054], [0067]-[0068], example 5 | 1-10 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **08 March 2022** | **22 March 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**
**Information on patent family members**

International application No.
**PCT/JP2021/048650**

| Patent document cited in search report | Publication date (day/month/year) | Patent family member(s) | Publication date (day/month/year) |
|---|---|---|---|
| JP 47-2853 B1 | 26 January 1972 | (Family: none) | |
| JP 8-67718 A | 12 March 1996 | (Family: none) | |
| WO 2020/226178 A1 | 12 November 2020 | (Family: none) | |
| JP 6-298810 A | 25 October 1994 | (Family: none) | |
| WO 2018/164147 A1 | 13 September 2018 | US 2019/0389983 A1<br>claims, paragraphs [0066]-[0067], [0084]-[0085], example 5<br>EP 3594250 A1<br>CN 110418806 A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- CN 110467695 A
- JP H859717 A
- JP 2021002103 A